# EUROPÄISCHE PATENTSCHRIFT

(11) **EP 0 841 513 B1**
(45) Veröffentlichungstag und Bekanntmachung des Hinweises auf die Patenterteilung: **13.06.2001**
(21) Anmeldenummer: 97117902.3
(22) Anmeldetag: 16.10.1997
(51) Int. Cl.: F16L 33/207, F16L 37/14, F16L 33/22

(54) **Kupplung für Saug- oder Druckschläuche**
Coupling for suction or pressure hoses
Raccordement pour tuyaux d'aspiration ou tuyaux sous pression

(30) Priorität: 09.11.1996 DE 29619501 U
(43) Veröffentlichungstag der Anmeldung: 13.05.1998
(73) Patentinhaber: REHAU AG + Co, 95111 Rehau (DE)
(72) Erfinder: Oelschlegel, Alexander, 95111 Rehau (DE)

(56) Entgegenhaltungen:
- EP-A- 0 264 010
- EP-A- 0 621 432
- EP-A- 0 728 979
- DE-A- 2 711 584
- US-A- 4 063 760
- US-A- 4 626 001
- US-A- 5 094 493

## Beschreibung

Die Erfindung betrifft eine Kupplung für Saug- oder Druckschläuche gemäß dem Oberbegriff der Anspruchs 1. Eine solche Kupplung ist aus der EP 0 264 010 bekannt.

Aus der DE 37 41 646 A 1 ist eine Schlauchverbindung bekannt, bei der ein an ein Rohrstück angeformter Anschlußfitting in das Schlauchende eingesteckt wird. Dieser Anschlußfitting besitzt eine radiale Umfangsprofilierung, welche mittels plastischer Verformung des Steckbereichs des Rohrstückes geschaffen worden ist. Der Anschlußfitting mit dem Rohrstück ist aus metallischem Werkstoff geformt. Die als Profilierung des Steckbereichs wirkenden Umfangsrippen sind in Form von umlaufenden Rillen mittels plastischer Verformung des Rohrstückes geschaffen worden. Bei diesem Vorgang wird das Rohrstück auf einen Dorn aufgesteckt, da die bei der plastischen Verformung auftretenden Kräfte so groß sind, daß das gewünschte Lumen des Anschlußfittings auch im Verformungsbereich nicht gehalten werden könnte.

Der bekannte Anschlußfitting ist nur in einem aufwendigen Arbeitsgang herstellbar. Hierbei wird an dem aus einem plastisch verformbaren Metall bestehenden Rohrstück einseitig ein Anschlußfitting angeformt, welcher mit seinen Axialrippen durch Hämmern auf einer Hämmermaschine oder Knetmaschine hergestellt wird. Dabei wird das Rohr auf einen zylindrischen Dorn aufgesteckt, dessen Durchmesser kleiner ist als der Innendurchmesser des Rohrstücks. Dieser aufwendige Herstellungsprozeß führt zu einer Verteuerung der gesamten Schlauchverbindung.

Aus der DE 32 43 365 C 2 ist eine Quetscharmatur für Schläuche für unter Druck stehende Fluide bekannt, die einen Anschlußfitting für den Schlauch besitzt, der an der Anschlußoberfläche eine Mehrzahl von axial hintereinander mit Abstand voreinander angeordnete und durch Stege getrennte Nuten aufweist. Femer besitzt diese Quetscharmatur eine den Schlauch über dem Anschlußfitting umfassende Quetschhülse. Das wesentliche dieser Veröffentlichung wird in der unterschiedlichen Gestaltung der Nuten am äußeren Umfang des Anschlußfittings gesehen.

Hier setzt die Erfindung ein, die es sich zur Aufgabe gestellt hat, eine einfach herzustellende und damit kostengünstige Kupplung für Saug- oder Druckschläuche anzugeben, wobei der Anschlußfitting in seinem Herstellungsaufwand vereinfacht werden soll. Diese Aufgabe wird gelöst durch eine Kupplung gemäß Anspruch 1.

Der erfindungsgemäß aus Kunststoff hergestellte Anschlußfitting kann als Spritzling in Form des Spritzgußverfahrens hergestellt werden. Dies ist ein einfacher Arbeitsvorgang, da hier lediglich ein in einer Spritzgußmaschine plastifizierter Kunststoff in ein Formnest gedrückt wird, der Spritzling dort erkaltet und dann aus dem Formnest ohne weiteren Arbeitsanfall direkt der Montageeinheit zugeführt werden kann. Dabei wird der Anschlußfitting in bekannter Weise zunächst mit seinem Steckteil in das Schlauchlumen eingesetzt. Danach wird die Quetschhülse über dieser Montageeinheit verquetscht und der Anschlußfitting somit unverrückbar im Schlauchlumen festgelegt. Falls erforderlich wird der Anschlußfitting im Bereich der Quetschhülse durch ein eingeschobenes Metallröhrchen verstärkt. Der weitere Montageschritt ist das Einstecken des Kopfteils des Anschlußfittings in das Lumen des Anschlußstutzens des Arbeitsgerätes. Danach erfolgt die formschlüssige Verbindung dieses Aufbaus mit dem Arbeitsgerät.

Der besondere Vorteil der Erfindung wird darin gesehen, daß der Anschlußfitting nicht mehr zur kraftschlüssigen Verbindung benötigt wird und nur noch Dichtfunktion hat. Die für den Anschluß benötigte Kraft wird vielmehr über die Quetschhülse aus Metall und die Überwurfmutter aufgebracht. Die Quetschhülse kann dabei ein geformtes Blechteil sein.

Eine Verbindungsmöglichkeit ergibt sich erfindungsgemäß dadurch, daß die Quetschhülse an ihrem dem Anschlußstutzen des Arbeitsgerätes zugewandten Ende einen flanschartigen Bund besitzt, und daß das Anschlußelement eine Überwurfmutter ist, welche die Quetschhülse am Anschlußstutzen des Arbeitsgerätes fixiert. In diesem Fall ragt die Quetschhülse mit dem flanschartigen Bund nur über einen Teilbereich des Kopfstückes und steht mit der Außenfläche des flanschartigen Bundes an der Querschnittsfläche des Anschlußstutzens an. Der Anschlußstutzen besitzt an seinem äußeren Umfang ein Gewinde, welches mit dem Innengewinde der Überwurfmutter korrespondiert. Die Überwurfmutter selbst besitzt an ihrem inneren Umfang einen umlaufenden Halteflansch, welcher bei der Herstellung der Schraubverbindung die Innenfläche des flanschartigen Bundes der Quetschhülse hintergreift. Auf diese Weise wird die erwünschte Verbindung zwischen dem Anschlußstutzen des Arbeitsgerätes und dem Druckschlauch hergestellt.

In der Zeichnung sind Ausführungsbeispiele der erfindungsgemäßen Kupplung schematisch dargestellt; es zeigt:

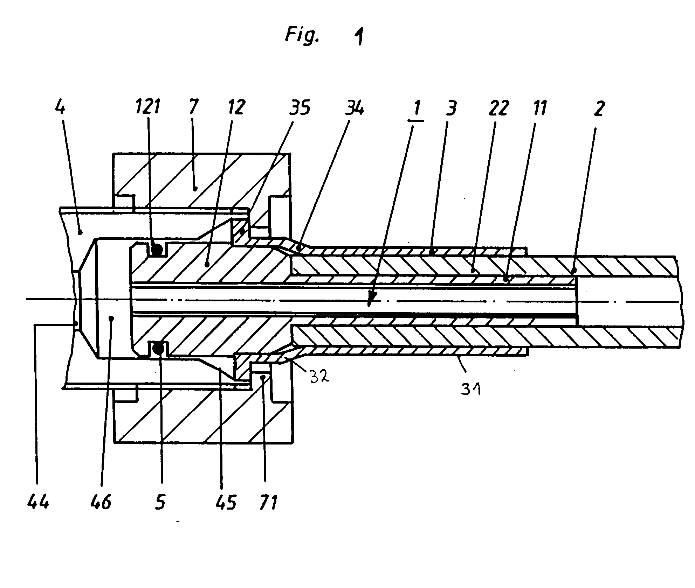

Fig. 1 die Kupplung mit Überwurfmutter

Fig. 1 zeigt den Anschlußfitting 1 mit seinem Steckbereich 11 und dem Kopfbereich 12. Der Steckbereich 11 dann an seinem äußeren Umfang sägezahnartig aufgestellte Umfangsnuten aufweisen.

Der Steckbereich 11 ist in das Lumen 21 des Schlauches 2 eingesetzt. Über dem Steckbereich 11 des Anschlußfittings 1 ist die Quetschhülse 3 mit ihrem Teilbereich 31 unter Herstellung der unlösbaren Verbindung zwischen Quetschhülse 3, Schlauchende 22 und Anschlußfitting 1 durch Verpressen aufgebracht.

Der Kopfbereich 12 des Anschlußfittings 1 greiff dabei in das Lumen 44 des Anschlußstutzens 4 ein. In des Kopfbereich 12 des Anschlußfittings 1 ist die Umfangsnut 121 zur Aufnahme des Dichtrings 5 eingebracht, der für eine druck- und flüssigkeitsdichte Abdichtung zwischen dem Kopfbereich 12 des Anschlußfittings 1 und dem inneren Umfang des Anschlußstutzens 4 sorgt. Auf diese Weise wird die feste und flüssigkeitsdichte Verbindung zwischen dem Anschlußstutzen 4 und der Kombination Anschlußfitting 1, Schlauchende 22 und Quetschhülse 3 hergestellt.

Weiterkin zeigt Fig. 1 die erfindungsgemäße Kupplung unter Verwendung einer Überwurfmutter 7. Die Quetschhülse 3 besitzt an ihrem aufgeweiteten freien Ende 34 einen flanschartigen Bund 35, welcher an der Stirnfläche 45 des Anschlußstutzens 4 anschlägt. Der Anschlußstutzen 4 besitzt an diesem freien Ende eine Erweiterung 46 des Lumens 44, in welche der Kopfbereich 12 des Anschlußfittings 1 eingesetzt ist.

Die eigentliche Verbindung zwischen der Kombination Anschlußfitting 1, Schlauchende 22 und Quetschhülse 3 erfolgt durch den Innenflansch 71 der Überwurfmutter 7, welcher den flanschartigen Bund 35 am Ende der Preßhülse 3 halternd hintergreift.

## Patentansprüche

1. Kupplung für Saug- und Druckschläuche mit einem in das Lumen (21) des Schlauches (2) eingesetzten Anschlussfitting (1) und einer den Schlauch (2) über dem Anschlussfitting (1) umfassenden und auf diesem festlegenden, metallischen Quetschhülse (3), wobei der Anschlussfitting (1) mit dem Anschlussstutzen (4) des Arbeitsgeräts formschlüssig und flüssigkeitsdicht verbunden ist, wobei der Kopfbereich (12) des Anschlussfittings (1) in einem Lumen (44,46) des Anschlussstutzens (4) eingesetzt ist und die Quetschhülse (3) an ihrem freien Ende (34) einen flanschartigen Bund (35) besitzt und der flanschartige Bund (35) der Quetschhülse (3) an einer Stirnfläche (45) des Anschlussstutzens (4) anschlägt, und mit einem Anschlussselement, das den flanschartigen Bund der Quetschhülse (3) haltend hintergreift, **dadurch gekennzeichnet,** dass der Anschlussfitting aus polymerem Werkstoff besteht und als Anschlussselement eine Überwurfmutter (7) mit einem Innenflansch (71) vorgesehen ist, der den flanschartigen Bund (35) der Quetschhülse (3) haltend hintergreift, und mit dem die Überwurfmutter (7) den flanschartigen Bund (35) der Quetschhülse (3) kraftschlüssig mit der Stirnfläche (45) des Anschlussstutzens (4) des Arbeitsgeräts verbindet.

## Claims

1. A coupling for suction and pressure tubing with a connection fitting (1) inserted into the lumen (21) of the tubing (2) and a locking, metallic squeeze-type sleeve (3) encompassing the tubing (2) over the connection fitting (1); the connection fitting (1) interlocks with the connection piece (4) of the tool and is impervious to liquid; the head (42) of the connection fitting (1) is set into a lumen (44, 46) of the connection piece (4), and the squeeze-type sleeve (3) has a flange-like collar (35) at its open end (34), said collar (35) stopping against a flange face (45) of the connection piece (4) and, with a supporting connection element that engages behind the flange-like collar of the squeeze-type sleeve (3), said coupling **is characterized** in that the connection fitting is made of polymer material, and a union nut (7) with an inner flange (71) is provided as a retaining connection element, said flange engaging behind the flange-like collar (35) of the crimping sleeve (3), and with which flange the union nut (7) interlocks to connect the flange-like collar (35) of the squeeze-type sleeve (3) with the flange face (45) of the tool connection piece (4).

## Revendications

1. Jonction pour tuyaux d'aspiration et tuyaux de pression équipé d'un raccord à sertir (1) placé dans la lumière (21) du tuyau (2) et d'un manchon de compression (3) métallique, enserrant le tuyau (2) par le biais du raccord à sertir (1) et relié solidement à celui-ci, - le raccord à sertir (1) étant assemblé mécaniquement à la garniture (4) de l'appareil de façon à obtenir un raccord étanche et le manchon de compression (3) possédant à son extrémité libre (34) une bride en forme de collerette, laquelle vient en butée de la face avant de la garniture (4) - et enfin d'un élément de raccordement venant se pincer derrière la bride en forme de collerette du manchon de compression (3), caractérisée en ce que le raccord à sertir (1) est en polymère et qu'en guise d'élément de raccordement un écrou prisonnier (7) avec une bride intérieure (71) est prévue, qui retient la bride en forme de collerette (35) du manchon de compression (3) et avec laquelle l'écrou prisonnier (7) relie solidement la bride en forme de collerette (35) du manchon de compression (3) à la face avant (45) de la garniture (4) de l'appareil.
